Europäisches Patentamt

European Patent Office

Office européen des brevets

(19)

(11) Numéro de publication: **0 187 066**
**B1**

## FASCICULE DE BREVET EUROPEEN

(12)

(45) Date de publication du fascicule du brevet:
22.03.89

(51) Int. Cl.⁴: **C09K 11/84**, H01J 9/22,
G21K 4/00

(21) Numéro de dépôt: 85402293.6

(22) Date de dépôt: 25.11.85

(54) Ecran radioluminescent en couche épaisse, son procédé de fabrication et dispositif pour la mise en oeuvre du procédé.

(30) Priorité: 07.12.84 FR 8418740

(43) Date de publication de la demande:
09.07.86 Bulletin 86/28

(45) Mention de la délivrance du brevet:
22.03.89 Bulletin 89/12

(84) Etats contractants désignés:
DE GB NL

(56) Documents cités:
DE-A- 2 457 853
DE-A- 2 614 352
FR-A- 2 211 521
US-A- 3 883 747

Le dossier contient des informations techniques
présentées postérieurement au dépôt de la demande et
ne figurant pas dans le présent fascicule.

(73) Titulaire: COMMISSARIAT A L'ENERGIE ATOMIQUE,
31/33, rue de la Fédération, F-75015 Paris(FR)

(72) Inventeur: **Bonzom, Jean, 39, rue du Bournet,**
**F-38170 Seyssins(FR)**
Inventeur: **Roy, Nelly, 63, rue Georges Maeder,**
**F-38170 Seyssinet(FR)**
Inventeur: **Thomas, Gérard, 10, Avenue des 120 Toises,**
**F-38800 Le Pont de Claix(FR)**

(74) Mandataire: **Mongrédien, André et al, c/o**
**BREVATOME 25, rue de Ponthieu, F-75008 Paris(FR)**

**Description**

La présente invention concerne un écran radioluminescent en couche épaisse permettant de convertir des rayonnements X ou γ de haute énergie (> 200 keV) en photons lumineux, son procédé de fabrication ainsi qu'un dispositif, permettant la mise en œuvre du procédé. Elle s'applique à la détection d'images de rayonnement et notamment au contrôle du champ d'irradiation d'un malade, lors d'une séance de radiothérapie.

A l'heure actuelle, il existe différents types d'écran permettant de convertir les rayonnements non lumineux tels que les rayonnements X ou γ, issus d'une source d'irradiation, en rayonnements lumineux.

En imagerie médicale, on utilise des écrans intensificateurs, comportant une couche mince, de l'ordre de 100 μm, d'un matériau luminophore tel que le $CaWO_4$. Le luminophore réémet l'énergie absorbée, issue des rayonnements incidents, sous forme de rayonnements lumineux. Ce type d'écran ne donne des images de très bonne qualité que si le rayonnement utilisé est de faible ou moyenne énergie. En revanche pour des rayonnements d'énergie supérieure à 200 keV, l'efficacité de conversion de ces intensificateurs n'est pas assez élevée.

Pour augmenter le rendement lumineux de ces écrans, pour des rayonnements de plus forte énergie, on utilise de façon connue, des écrans renforçateurs au plomb.

Ainsi les photons non lumineux de haute énergie sont transformés en photons non lumineux d'énergie inférieure par collision Compton avec des électrons de la feuille métallique au plomb. Ces photons non lumineux d'énergie inférieure sont alors transformés en photons lumineux par une couche de matériau luminophore. Ce type d'écran est décrit dans la demande de brevet français n° 2 463 420. Par ailleurs, on connaît différentes structures d'écran radioluminescent permettant d'améliorer la résolution géométrique.

Ainsi par exemple, dans le brevet japonais n° 5 665 078, un écran formé d'un matériau luminophore dispersé dans un liant, est coloré par un colorant organique et minéral de façon à ce que le coefficient de reflexion dans le domaine des longueurs d'ondes d'excitation du luminophore soit inférieur au coefficient de réflexion dans le domaine des longueurs d'onde d'émission du luminophore. De cette façon, l'étalement du rayonnement d'excitation est restreint et la netteté est accrue.

Dans la demande de brevet français n° 2 412 855, les particules du luminophore sont noyées ou en suspension dans un matériau d'indice de réfraction voisin de celui du luminophore, pour obtenir un écran optiquement transparent. De plus, pour adapter ces écrans aux gammes de sensibilité des détecteurs photoélectriques, un matériau de conversion de longueur d'onde peut être ajouté à la structure de l'écran. Le procédé de fabrication de ces écrans consiste à sécher par congélation le mélange luminophore et matériau en solution, puis à pulvériser ce mélange séché pour obtenir une poudre de dimensions homogènes et enfin de chauffer cette poudre à une température et pression suffisantes pour provoquer le fluage et obtenir un corps solide.

Les deux types d'écrans décrits ci-dessus présentent aux très fortes énergies (de quelques MeV à 25 MeV) un mauvais rendement lumineux.

L'invention a pour but de remédier à cet inconvénient notamment d'élaborer un écran radioluminescent en couche épaisse comprenant un luminophore de la famille des terres rares et ayant un pouvoir d'arrêt suffisant pour atteindre un rapport signal sur bruit satisfaisant pour une quantité de rayonnements acceptable en imagerie de positionnement.

On connaît également des écrans intensificateurs pour les rayons X constitués essentiellement de $Gd_2O_2S$ dopé par du terbium, noyé dans un liant organique polymérique transparent, comme il est décrit dans les documents DE-A 2 457 853 (GB-A 1 489 398) et US-A 3 883 747.

L'invention a pour objet un écran radioluminescent permettant de convertir des rayonnements X ou γ de haute énergie en photons lumineux, comprenant un matériau sous forme d'une couche, constitué de $Gd_2O_2S$ dopé par un luminophore de la famille des terres rares, noyé dans un liant organique polymérique transparent à la lumière d'émission du matériau dopé. Cet écran se caractérise en ce que le matériau est sous la forme d'une couche épaisse, d'épaisseur supérieure à 1 mm, et en ce que le liant organique polymérique résiste aux rayonnements de haute énergie et comprend un copolymère de chlorotrifluoroéthylène et de fluorure de vinylidène.

Selon un mode préféré de réalisation le luminophore est du terbium.

Selon la variante, le luminophore est de l'europium.

L'invention a aussi pour objet un procédé de fabrication d'un écran radioluminescent comprenant:

(a) l'élaboration dans un solvant organique, d'un co-polymère de chlorotrifluoroéthylène et de fluorure de vinylidène,

(b) l'introduction de $Gd_2O_2S$ dopé dans cette solution,

(c) l'homogénéisation du mélange obtenu,

(d) la distribution et la répartition du mélange sur un support, la répartition se faisant à l'aide de vibrations, et

(e) le séchage du mélange sur le support à pression atmosphérique et température ambiante.

Selon un mode préféré de réalisation le solvant organique est du méthylisobutylcétone.

Selon un mode de réalisation, l'étape (a) consiste à mettre le liant en solution dans un solvant selon les proportions: Xg de liant pour 10.Xg de solvant.

Selon un autre mode de réalisation l'étape (b) consiste à mélanger le $Gd_2O_2S$ dopé au terbium au liant en solution à raison de Xg de matériau dopé pour (X/5)g de liant en solution.

Le dispositif pour la mise en œuvre du procédé de fabrication comprend:

– un récipient muni d'une ouverture permettant l'écoulement du mélange matériau dopé-liant en solution et dans lequel le mélange subit une agitation,

– des moyens pour distribuer le mélange sortant du réservoir, sur le support,

– des moyens pour produire des vibrations sur le support et des moyens pour effectuer un mouvement relatif entre le récipient et ledit support.

Selon un mode de réalisation, le mouvement relatif entre le récipient et le support est un mouvement de rotation du support.

Selon une variante, le mouvement relatif entre le récipient et le support est un mouvement de translation du récipient et des moyens permettant de distribuer le mélange sur le support.

Les caractéristiques et avantages de l'invention ressortiront mieux de la description qui va suivre donnée à titre illustratif et non limitatif, en référence aux figures annexées dans lesquelles:

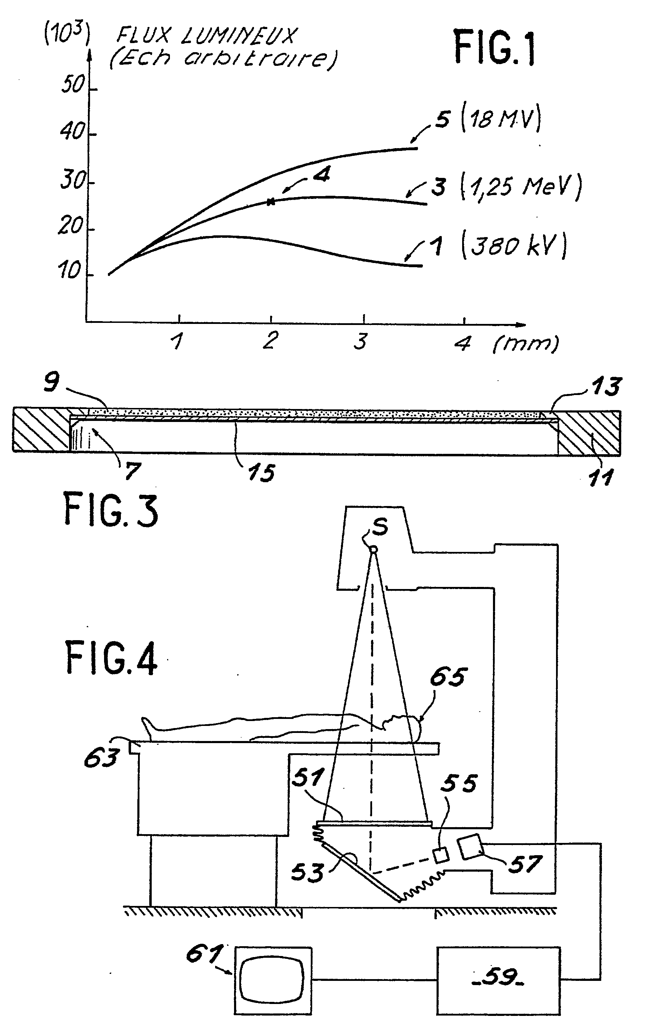

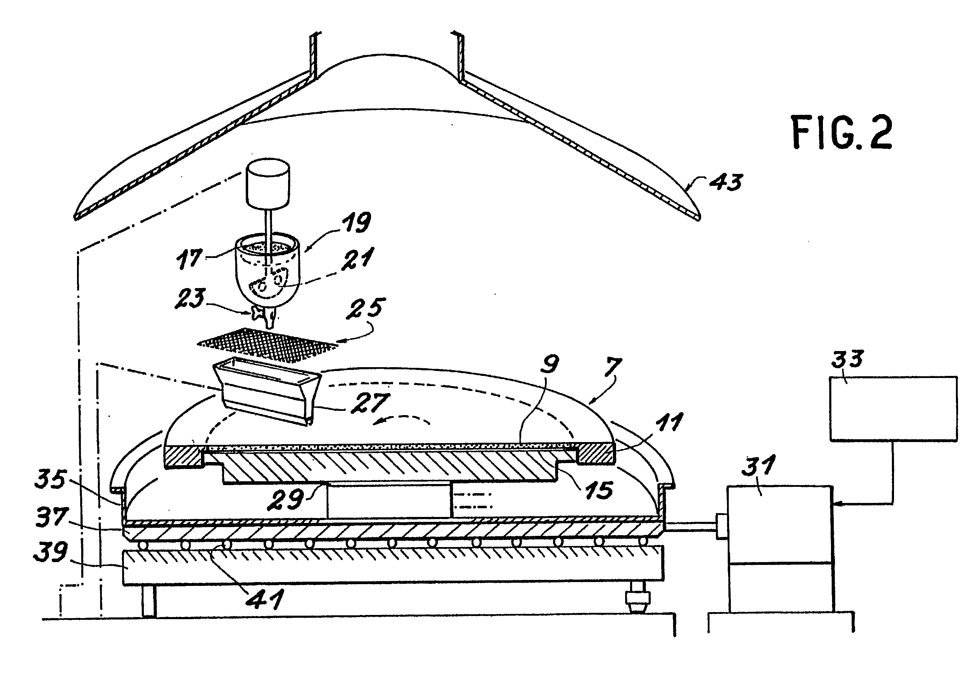

– les courbes de la figure 1 représentent le flux lumineux émis en fonction de l'épaisseur de l'écran radioluminescent utilisé,

– la figure 2 représente schématiquement le dispositif de fabrication de l'écran épais,

– la figure 3 représente schématiquement le support de l'écran épais,

– la figure 4 représente une application d'un écran épais conforme à l'invention.

Les courbes de la figure 1 représentent le flux lumineux émis en fonction de l'épaisseur d'un écran radioluminescent, constitué de $Gd_2O_2S$ dopé au terbium: la courbe 1 a été obtenue avec un générateur X de 380 kV, la courbe 3 a été obtenue avec une source de $^{60}Co$ correspondant à une énergie de 1,25 MeV et la courbe 5 a été obtenue avec un accélérateur linéaire de 18 MV. On constate sur ces courbes, qu'à partir d'une certaine valeur de l'épaisseur de l'écran, on arrive à un optimum du flux lumineux émis par l'écran et que, plus l'énergie d'irradiation est grande plus l'épaisseur de l'écran doit être importante pour arriver à un optimum de flux lumineux.

Ainsi pour une source d'irradiation de $^{60}Co$ correspondant à une énergie d'irradiation de 1,25 MeV, courbe 3, utilisé en radiothérapie, un écran de $Gd_2O_2S$ dopé au terbium présente un optimum 4 d'efficacité de détection pour une épaisseur de 2 mm.

La figure 2 représente le dispositif de fabrication d'un écran épais. Dans le présent texte, on entend par épais, une épaisseur supérieure à 1 mm. Le matériau utilisé: le $Gd_2O_2S$ constitue une matrice lourde d'une bonne efficacité de détection notamment aux rayonnements X.

Ce matériau est dopé par un luminophore de la famille des terres rares de façon telle que la longueur d'onde d'émission convienne à la sensibilité du détecteur utilisé. Notamment pour la radiothérapie utilisant des caméras vidéo à bas niveau de lumière, le $Gd_2O_2S$ dopé au terbium convient tout particulièrement.

Le matériau dopé est aggloméré à l'aide d'un polymère organique répondant dans l'ordre de priorité, aux critères suivants:

– une très bonne tenue aux rayonnements,

– une transmission de la longueur d'onde d'émission du $Gd_2O_2S$ la plus grande possible,

– un indice de réfraction le plus proche possible de celui du $Gd_2O_2S$.

Ce liant comprend un copolymère de chlorotrifluoroéthylène et de fluorure de vinylidène commercialisé sous le nom de "Kelf 800". Le liant est mis en solution dans un solvant de méthylisobutylcétone selon la formule Xg de liant dans (10X)g de solvant. La dissolution se fait sous agitation magnétique pendant plusieurs heures à environ 60°C.

Le mélange du matériau dopé avec le liant cité s'effectue dans des proportions déterminées: Xg du matériau dopé pour (X/5)g de liant, notamment pour un écran d'épaisseur 2,0 mm ± 0,1, on mélange 2000 g de matériau dopé à 400 g de liant.

Le mélange 17 du matériau dopé avec le liant est effectué à partir de moyens de brassage permettant d'obtenir un mélange homogène. Ce mélange 17 est ensuite déposé sur un support 7 à partir de moyens de distribution 19, 23, 25, 27 et de moyens de répartition 29, 31 comprenant un mouvement de rotation et des mouvements de vibration du support.

Le brassage du mélange, pour casser les agrégats se fait au moyen d'une agitation magnétique chauffante pendant 10 mn environ suivie d'un passage dans un bac à ultrasons pendant 10 mn également. Quelques interventions manuelles à la spatule permettent de limiter la sédimentation.

Ce mélange 17 est ensuite transvasé rapidement dans un réservoir 19, dans lequel une agitation mécanique est réalisée par un agitateur 21 de forme adaptée à celle du réservoir 19. Après environ 5 mn d'agitation mécanique dans le réservoir, on ouvre ce réservoir par l'intermédiaire d'un robinet 23. Le débit du réservoir est réglé par rapport à la viscosité de la préparation et à la vitesse de rotation du support. Cette préparation passe alors à travers une grille en acier inoxydable 25 à maille de 200 μm, montée sur un entonnoir à fente 27. Cet entonnoir a une fente de 130 mm de long pour une largeur de 0,5 mm.

La rotation du support 7 est assurée par un moteur rotatif 29 placé sous le support 7 selon son axe central vertical. Ce mouvement de rotation évite les regroupements linéaires de grains provoqués par la directivité des ondes vibratoires. La vitesse de rotation utilisée est environ de 1/2 tour/mn.

Les mouvements vibratoires du support 7 sont assurés par un vibrateur 31 associé à un générateur-amplificateur 33. Ces vibrations sont transmises au support 7 par l'intermédiaire d'un bac 35 placé sur un support rigide 37 sous le moteur rotatif 29 qui est lui-même placé sous le support 7. La fréquence de vibration choisie est de 60 Hz avec un courant de 8,3 A, compte tenu d'un déplacement maximal admis pour les grains de 20 μm. Ces vibrations ainsi que la rotation du support 7, sont maintenues pendant une heure au moins.

L'ensemble constitué par le support 7, le moteur rotatif 29, le bac 35 et le support rigide 37 est posé sur un plateau de mise à niveau 39 par l'intermédiaire de galets anti-frottement 41. Ce plateau permet d'avoir un support parfaitement plan.

Le séchage qui dure au moins 48 H, se fait sans aucune manipulation de l'écran 9 et de son support 7 afin de garantir l'adhérence du matériau luminophore constituant l'écran 9, sur son support 7. L'ensemble: préparation, distribution, répartition et séchage du mélange matériau dopé-liant se fait sous une hotte aspirante 43 avec un flux laminaire exempt de poussière, homogène sur toute la surface, avec reprise par extraction afin d'éliminer les vapeurs du solvant.

Pour un type de fabrication grande série, le mouvement de rotation du support est remplacé par un mouvement relatif de translation du système de distribution qui est lui-même élargi.

La figure 3 représente schématiquement le support 7 de l'écran épais 9. Ce support est parfaitement plan, il est constitué par une bague usinée 11 en AG₃ anodisée noire de 543 mm de diamètre extérieur, de 496 mm de diamètre intérieur, et de 20 mm d'épaisseur. Sur une épaisseur 13 de 1 mm, cette bague 11 a un diamètre de 482 mm. Une fenêtre en tôle d'aluminium 15 anodisée de 1 mm d'épaisseur et de 496 mm de diamètre est collée sur cette bague, l'aluminium étant transparent aux rayonnements. Cette fenêtre présente un aspect sans rayures sur la partie active de l'écran et pour cela les tôles avant découpe sont protégées par un film pelable. Le collage de la fenêtre est réalisé sur sa face intérieure par un film à prise rapide du type cyanoacrylate, et sur sa face extérieure par une colle épaisse de type Bostik 292 déposée en forme de joint. Avant chaque essai, la face intérieure côté dépôt, est dépoussiérée à l'azote et nettoyée à la méthylisobutylcétone.

La figure 4 représente une application d'un écran épais conforme à l'invention pour le contrôle du champ d'irradiation d'un malade lors d'une séance de radiothérapie. Ce dispositif de contrôle comprend: une source d'irradiation S, un écran épais radioluminescent 51, des moyens de détection 57 des moyens de traitement 59 et de visualisation 61. L'écran 51 est optiquement couplé aux moyens de détection 57 par l'intermédiaire de moyens de réflexion de lumière 53 suivis par une optique 55. Ces moyens de réflexion et cette optique sont rendus solidaires de moyens de détection 57. Ces moyens de détection 57 sont électriquement couplés aux moyens de traitement 59 et de visualisation 61.

L'écran 51 de forme plane est disposé de façon à être parallèle à la table 63 sur laquelle est placé le patient 65. Celui-ci est placé entre la source d'irradiation S et l'écran radioluminescent 51. Le faisceau des rayonnements émis par la source S interagit avec le patient. L'écran épais 51 capte les rayonnements issus de ce patient et les convertit en signaux lumineux qui sont renvoyés sur des moyens de réflexion 53.

Ces moyens de réflexion 53 sont placés au-dessous de l'écran 51, ils consistent par exemple en un miroir plan, placé à 45° par rapport à la normale de l'écran. Après réflexion, le signal lumineux est transmis aux moyens de détection 57 par une optique constituée par un objectif 55. Les moyens de détection 57 consistent en une caméra vidéo à bas niveau de lumière. Cette caméra 57 émet alors des signaux électriques qui parviennent aux moyens de traitement 59 et de visualisation 61. Ces moyens sont par exemple un microprocesseur d'animation et de traitement des images, et un moniteur de télévision. Ce dispositif donne donc une image radiothérapique à deux dimensions d'au moins une partie du patient.

**Revendications**

1. Ecran radioluminescent permettant de convertir des rayonnement X ou γ de haute énergie en photons lumineux, comprenant un matériau sous forme d'une couche, constitué de Gd₂O₂S dopé par un luminophore de la famille des terres rares, noyé dans un liant organique polymérique transparent à la lumière d'émission du matériau dopé, caractérisé en ce que le matériau est sous la forme d'une couche épaisse, d'épaisseur supérieure à 1 mm, et en ce que le liant organique polymérique résiste aux rayonnements de haute énergie et comprend un co-polymère de chlorotrifluoroéthylène et de fluorure de vinylidène.

2. Ecran selon la revendication 1, caractérisé en ce que le luminophore est du terbium.

3. Ecran selon la revendication 1, caractérisé en ce que le luminophore est de l'europium.

4, Procédé de fabrication d'un écran radioluminescent selon l'une quelconque des revendications 1 à 3, caractérisé en ce qu'il comprend:

(a) l'élaboration dans un solvant organique, d'un co-polymère de chlorotrifluoroéthylène et de fluorure de vinylidène,

(b) l'introduction de Gd₂O₂S dopé dans cette solution,

(c) l'homogénéisation du mélange (17) obtenu,

(d) la distribution et la répartition du mélange sur un support (7), la répartition se faisant à l'aide de vibrations et

(e) le séchage du mélange sur le support (7) à pression atmosphérique et température ambiante.

5. Procédé selon la revendication 4, caractérisé en ce que le solvant organique est du méthylisobutylcétone.

6. Procédé selon l'une quelconque des revendications 4 et 5, caractérisé en ce que l'étape (a) consiste à mettre le liant en solution dans un solvant selon les proportions: X g de liant pour 10•X g de solvant.

7. Procédé selon l'une quelconque des revendications 4 à 6, caractérisé en ce que l'étape (b) consiste à mélanger le Gd₂O₂S dopé au terbium au liant en solution à raison de X g de matériau dopé pour (X/5) g de liant en solution.

8. Dispositif pour la mise en œuvre du procédé de fabrication d'un écran selon l'une quelconque des revendications 4 à 7, caractérisé en ce qu'il comprend:

– un récipient (19) muni d'une ouverture (23) permettant l'écoulement du mélange (17) matériau dopé-liant en solution et dans lequel le mélange (17) subit une agitation (21),

– des moyens (25, 27) pour distribuer le mélange (17) sortant du réservoir (19), sur le support (7),
– des moyens pour produire des vibrations (31, 33) sur le support (7) et des moyens pour effectuer un mouvement relatif entre le récipient et ledit support.

9. Dispositif selon la revendication 8, caractérisé en ce que le mouvement relatif entre le récipient (19) et le support (7) est un mouvement de rotation (29) du support (7).

10. Dispositif selon la revendication 8, caractérisé en ce que le mouvement relatif entre le récipient (19) et le support (7) est un mouvement de translation du récipient et des moyens permettant de distribuer le mélange sur le support.

## Patentansprüche

1. Radiolumineszenzschirm, der die Umwandlung von Röntgen- oder γ-Strahlung hoher Energie in Lichtphotonen ermöglicht, enthaltend ein Material in Form einer Schicht aus $Gd_2O_2S$, das mit einem Leuchtstoff aus der Familie der seltenen Erden dotiert ist, der in ein organisches polymeres Bindemittel eingebettet ist, das für das von dem dotierten Material abgegebene Licht transparent ist, dadurch gekennzeichnet, daß das Material die Form einer Dickschicht hat, deren Dicke größer als 1 mm ist, und daß das organische polymere Bindemittel Strahlungen hoher Energie widersteht und ein Copolymer von Chlortrifluorethylen und von Vinylidenfluorid enthält.

2. Schirm nach Anspruch 1, dadurch gekennzeichnet, daß der Leuchtstoff Terbium ist.

3. Schirm nach Anspruch 1, dadurch gekennzeichnet, daß der Leuchtstoff Europium ist.

4. Verfahren zum Herstellen eines radiolumineszenten Schirms nach einem der Ansprüche 1 bis 3, dadurch gekennzeichnet, daß es enthält:
(a) Herstellung eines Copolymeren von Chlortrifluorethylen und von Vinylidenfluorid in einem organischen Lösungsmittel,
(b) Einführen von dotiertem $Gd_2O_2S$ in diese Lösung,
(c) Homogenisierung der erhaltenen Mischung (17),
(d) Ausbreiten und Verteilen des Gemischs auf einem Träger (7), wobei das Verteilen mit Hilfe von Schwingungen ausgeführt wird, und
(e) Trocknen des Gemischs auf dem Träger (7) unter Atmosphärendruck und Raumtemperatur.

5. Verfahren nach Anspruch 4, dadurch gekennzeichnet, daß das organische Lösungsmittel Methylisobutylketon ist.

6. Verfahren nach einem der Ansprüche 4 und 5, dadurch gekennzeichnet, daß der Schritt (a) darin besteht, das Bindemittel in Lösung in einem Lösungsmittel gemäß folgenden Verhältnissen zu versetzen: X g Bindemittel auf 10·X g Lösungsmittel.

7. Verfahren nach einem der Ansprüche 4 bis 6, dadurch gekennzeichnet, daß der Schritt (b) darin besteht, das mit Terbium dotierte $Gd_2O_2S$ mit dem Bindemittel in Lösung im Verhältnis X g dotiertes Material auf (X/5) g Bindemittel in Lösung zu vermischen.

8. Vorrichtung zur Durchführung des Verfahrens zur Herstellung eines Schirms nach einem der Ansprüche 4 bis 7, dadurch gekennzeichnet, daß sie enthält:
– einen Behälter (19), der mit einer Öffnung (23) versehen ist, die den Ausfluß des Gemischs (17) aus dotiertem Material und Bindemittel in Lösung ermöglicht und in dem das Gemisch (17) eine Durchmischung erfährt,
– Einrichtungen (25, 27), um das Gemisch (17), das den Behälter (19) verläßt, auf dem Träger (7) auszubreiten,
– Einrichtungen, um Schwingungen (31, 33) auf dem Träger (7) zu erzeugen, und Einrichtungen, um einer Relativbewegung zwischen dem Behälter und dem genannten Träger hervorzurufen.

9. Vorrichtung nach Anspruch 8, dadurch gekennzeichnet, daß die Relativbewegung zwischen dem Behälter (19) und dem Träger (7) eine Drehbewegung (29) des Trägers (7) ist.

10. Vorrichtung nach Anspruch 8, dadurch gekennzeichnet, daß die Relativbewegung zwischen dem Behälter (19) und dem Träger (7) eine translatorische Bewegung des Behälters und der Einrichtungen ist, die die Ausbreitung des Gemischs auf dem Träger ermöglichen.

## Claims

1. A radioluminescent screen making it possible to convert high-energy X-rays or gamma rays into luminous photons comprising a material in the form of a film constituted by $Gd_2O_2S$ doped with a luminophore of the rare earth family suspended in an organic polymer binder transparent to the light emitted by the doped material, characterised in that the material is in the form of a thick film with a thickness of more than 1 mm and in that the organic polymer binder resists the high-energy radiation and comprises a copolymer of chlorotrifluoroethylene and vinylidene fluoride.

2. A screen as in claim 1, characterised in that the luminophore is terbium.

3. A screen as in claim 1, characterised in that the luminophore is europium.

4. A method for producing a radioluminescent screen as in any one of claims 1 to 3, characterised in that it comprises:
(a) preparing a copolymer of chlorotrifluoroethylene and vinylidene fluoride in an organic solvent,
(b) introducing doped $Gd_2O_2S$ into this solution,
(c) homogenizing the mixture (17) obtained,
(d) distributing and spreading the mixture on a support (7), the spreading being effected with the aid of vibration, and
(e) drying the mixture on the support (7) at atmospheric pressure and ambient temperature.

5. A method as in claim 4, characterised in that the organic solvent is methylisobutylketone.

6. A method as in any one of claims 4 and 5, characterised in that stage (a) consists in putting the binder into solution in a solvent in the proportions: X g of binder to 10·X g of solvent.

7. A method as in any one of claims 4 to 6, characterised in that stage (b) consists in mixing the

Gd₂O₂S doped with terbium and the binder in solution in the proportions of X g of doped material to (X/5) g of binder in solution.

8. A device for implementing the method for producing a screen as in any one of claims 4 to 7, characterised in that it comprises:

— a container (19) provided with an opening (23) allowing the mixture (17) of doped material and binder in solution to flow out and in which the mixture (17) is agitated (21),

— means (25, 27) for distributing the mixture (17) leaving the reservoir (19) on the support (7),

— means for producing vibration (31, 33) on the support (7) and means for producing a relative movement between the container and said support.

9. A device as in claim 8, characterised in that the relative movement between the container (19) and the support (7) is a rotating movement (29) of the support (7).

10. A device as in claim 8, characterised in that the relative movement between the container (19) and the support (7) is a translating movement of the container and the means permitting distribution of the mixture on the support.

EP 0 187 066 B1

FIG.1

FIG.3

FIG.4

FIG.2